# EUROPEAN PATENT APPLICATION

(11) **EP 4 586 624 A1**
(43) Date of publication of application: **16.07.2025**
(21) Application number: 23872687.1
(22) Date of filing: 10.05.2023
(51) Int. Cl.: H04N 21/443, H04N 5/63, H02M 1/00, H02N 2/18

(54) **DISPLAY DEVICE**

(30) Priority: 28.09.2022 KR 20220123688
(71) Applicant: LG Electronics Inc., Yeongdeungpo-gu Seoul 07336 (KR)
(72) Inventor: BAEK, Dongchul, Seoul 06772 (KR); JANG, Jinhaeng, Seoul 06772 (KR)
(74) Representative: Schornack, Oliver
(86) International application number: PCT/KR2023/006346
(87) International publication number: WO 2024/071557

(57) **Abstract**

A display device according to an embodiment of the present disclosure may comprise an SoC, a power conversion device for supplying power to the SoC, and a zero-watt module for applying voltage to the power conversion device in a zero-watt mode. Accordingly, the present disclosure can minimize or reduce power consumption close to zero when the display device is turned off, and enables necessary power to be supplied in a power-off state via energy harvesting.

## Description

### [TECHNICAL FIELD]

The present disclosure relates to a display device. More particularly, the present disclosure relates to a method for minimizing standby power in a display device.

### [BACKGROUND ART]

As the issue of energy conservation and eco-friendly energy development grows, measures to minimize power consumption in various electronic devices are required. In particular, even when not in use, the power consumed to recognize remote control signals and the like tends to be considerable, even when the power is turned off.

Therefore, there may be a need for a method for reducing power consumption in a standby state when the power is turned off.

### [DISCLOSURE OF INVENTION]

### [TECHNICAL PROBLEM]

The present disclosure aims to minimize power consumption when a display device is powered off.

The present disclosure aims to reduce the power consumption of a display device to near zero when the display device is powered off.

The present disclosure aims to provide a display device capable of supplying required power in a power-off state through energy harvesting.

### [TECHNICAL SOLUTION]

According to an embodiment of the present disclosure, a display device includes a System on Chip (SoC), a power conversion device that supplies power to the SoC, and a zero-watt module that applies voltage to the power conversion device in a zero-watt mode.

The zero-watt module may include a battery configured to be charged by receiving external power while the display device is operating in a normal mode, and the battery may apply voltage to the power conversion device in the zero-watt mode.

The zero-watt module may include an energy harvesting module, and the energy harvesting module may apply voltage to the power conversion device in the zero-watt mode.

The energy harvesting module may include a semiconductor device that conducts using leakage dark current from an external power source, a current amplifier that amplifies current flowing through the semiconductor device, and a charge pump that generates power by charging and discharging the amplified current.

The energy harvesting module may include a photovoltaic harvesting module that converts light into power.

If output voltage of the energy harvesting module is less than a predetermined reference voltage in the zero-watt mode, the power conversion device may receive external voltage.

The zero-watt module may include a battery and an energy harvesting module, and one of the battery or the energy harvesting module may apply voltage to the power conversion device.

One of the battery or the energy harvesting module may apply voltage to the power conversion device according to an operating time of the display device in a normal mode.

The battery may apply voltage to the power conversion device if the operating time of the display device in the normal mode is equal to or greater than a predetermined reference time, and the power conversion device may apply voltage to the power conversion device if the operating time of the display device in the normal mode is less than the predetermined reference time.

The zero-watt module may intermittently apply voltage to an IR sensor in zero-watt mode.

### [ADVANTAGEOUS EFFECTS]

According to the embodiments of the present disclosure, it is possible to minimize standby power by minimizing the consumption of external power in a standby state.

According to the embodiments of the present disclosure, it is possible to reduce standby power through minimization of additional components by utilizing a power MCU for controlling the power conversion device as it is.

According to the embodiments of the present disclosure, it is possible to reduce standby power consumption to near zero through the use of a battery or energy harvesting module or the like.

### [BRIEF DESCRIPTION OF DRAWINGS]

FIG. 1 is a schematic diagram illustrating a conventional power supply circuit of a display device.
FIG. 2 is a schematic diagram illustrating a power supply circuit of a display device according to an embodiment of the present disclosure.
FIG. 3 is a schematic diagram illustrating a power supply circuit of a display device when a zero-watt module is a battery according to an embodiment of the present disclosure.
FIG. 4 is a schematic diagram illustrating a power supply circuit of a display device when a zero-watt module according to an embodiment of the present disclosure is an energy harvesting module.
FIG. 5 is a schematic diagram illustrating a first example of the energy harvesting module illustrated in FIG. 4.
FIG. 6 is a schematic diagram illustrating a second example of the energy harvesting module illustrated in FIG. 4.
FIG. 7 is a block diagram illustrating a detailed configuration of an MCU provided in a power conversion device of a display device according to an embodiment of the present disclosure.
FIG. 8 is a flowchart illustrating an operation method of a display device supporting a zero-watt mode according to an embodiment of the present disclosure.
FIG. 9 is a flowchart illustrating an operation method of a display device including a zero-watt module, according to an embodiment of the present disclosure.

### [BEST MODE FOR CARRYING OUT THE INVENTION]

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

A display device according to an embodiment of the present disclosure is, for example, an intelligent display device in which a computer support function is added to a broadcast reception function, and may have an easy-to-use interface such as a handwritten input device, a touch screen, a spatial remote control, or the like since an Internet function is added while fulfilling the broadcast receiving function. In addition, it is connected to the Internet and a computer with the support of a wired or wireless Internet function, so that functions such as e-mail, web browsing, banking, or games can also be performed. A standardized general-purpose OS may be used for these various functions.

Accordingly, in the display device described in the present disclosure, various user-friendly functions can be performed because various applications can be freely added or deleted, for example, on a general-purpose OS kernel. More specifically, the display device may be a network TV, Hybrid Broadcast Broadband TV (HBBTV), smart TV, light-emitting diode (LED) TV, organic light-emitting diode (OLED) TV, and the like and may be applied to a smart phone in some cases.

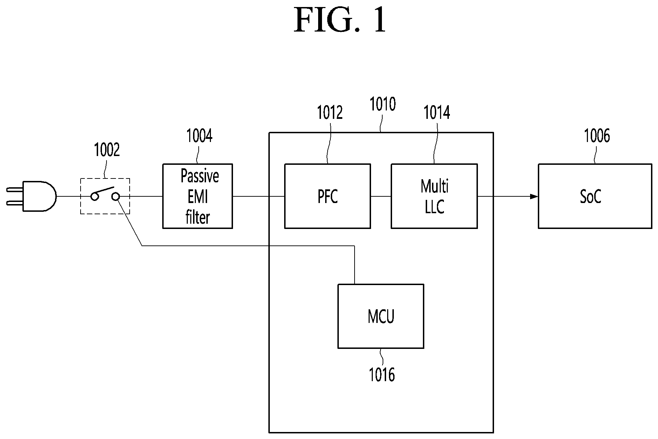

FIG. 1 is a schematic diagram illustrating a conventional power supply circuit for a display device.

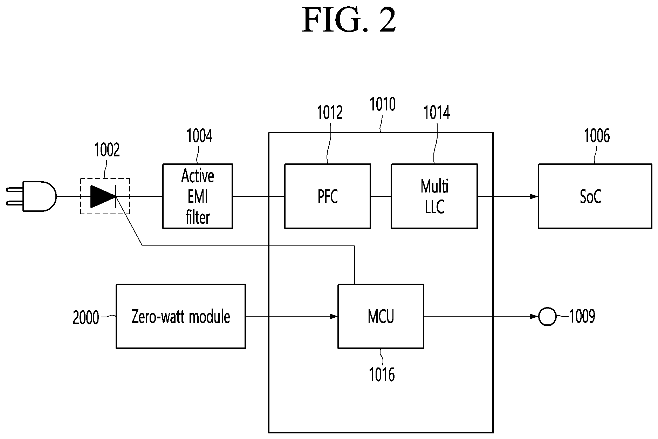

Referring to FIG. 1, a display device may include at least some or all of a relay 1002, an ElectroMagnetic Interference (EMI) filter 1004, a power conversion device 1010, and a System on Chip (SoC) 1006. While FIG. 1 illustrates only some configurations to illustrate the present disclosure, other configurations may be added in addition to those illustrated in FIG. 1. For example, although not shown in Figure 1, the display device may include a display, a speaker, a memory, a wireless communication interface, and an IR sensor 1009 (see FIG. 2) for receiving remote control signals.

Traditionally, a mechanical relay for disconnecting AC power is used as the relay 1002.

A passive EMI filter is used as the EMI filter 1004.

The power conversion device 1010 may supply power to the SoC 1006. The power conversion device 1010 may include a Power Factor Correction (PFC) circuit 1012, an Inductor-Inductor-Capacitor (LLC) converter 1014, and an Micro-controller Unit (MCU) 1016. The PFC circuit 1012 is a power factor correction circuit, and the LLC converter 1014 may convert and supply the output voltage of the PFC circuit 1012 to voltages required for different components of the SoC 1006 and display device. The MCU 1016 may control the PFC circuit 1012 and the LLC converter 1014. The MCU 1016 may be a controller that controls the behavior of a power supply circuitry, as distinct from the main MCU (not shown) provided in the SoC 1006.

The SoC 1006 may be a main controller that controls the operation of the display device.

On the other hand, conventionally, when a power cord is connected to an external power source, the relay 1002 is turned on to cause the power conversion device 1010 to consume the external power. In other words, not only when the display device is in a normal mode, but also when the display device is operating in a standby mode, the relay 1002 is turned on and consumes at least some of the external power.

The present disclosure seeks to minimize external power consumption in standby mode. Accordingly, the present disclosure seeks to provide a display device that supports a zero-watt mode for minimizing external power consumption in a standby state.

Here, the zero-watt mode may refer to an operating mode for minimizing consumption of external power even when a power cord is connected to an external power source. For example, if the power consumption in a conventional standby state is 0.5 W (500 mW), the zero-watt mode may be an operating mode that limits the power consumption to 5 mW or less. However, the aforementioned figures are merely examples, and zero-watt mode may refer to an operating mode designed to significantly reduce power consumption in a conventional standby state. Additionally, the term "zero-watt mode" is merely an example for explanatory purposes and should not be considered limiting.

FIG. 2 is a schematic diagram illustrating a power supply circuit for a display device according to an embodiment of the present disclosure.

Description that is redundant to that described in FIG. 1 will be omitted.

Referring to FIG. 2, a display device according to an embodiment of the present disclosure may include at least some or all of a relay 1002, an EMI filter 1004, an SoC 1006, an IR sensor 1009, a power conversion device 1010, and a zero-watt module 2000.

According to an embodiment of the present disclosure, the relay 1002 may be a semiconductor relay. For example, the relay 1002 may be a thyristor (SCR). In this case, the relay 1002 may have the advantage of eliminating the problem of high power consumption in the internal coil when the relay 1002 is a mechanical relay.

The EMI filter 1004 may be an active EMI filter. In this case, the EMI filter 1004 may also have the advantage of overcoming the problem of large power consumption due to resistance of the internal capacitor when the EMI filter 1004 is a passive EMI filter.

The IR sensor 1009 may be a sensor that detects an IR signal from a remote control device, such as a remote control. The IR sensor (1009) may receive voltage and sense IR signals even in a zero-watt mode.

For the power conversion device 1010, the PFC circuit 1012 and LLC converter 1014 may be the same as those in the prior art. It should be noted that in the prior art, the MCU 1016 operates only to control the PFC circuit 1012 and LLC converter 1014, whereas, in the present disclosure, the MCU 1016 operates in zero-watt mode. That is, according to the present disclosure, the MCU 1016 may operate to supply voltage from the zero-watt module 2000. For example, the MCU 1016 may turn off the relay 1002 in zero-watt mode, receive voltage from the zero-watt module 2000, and supply the voltage to the IR sensor 1009, or the like.

Alternatively, the zero-watt module 2000 may supply voltage to the MCU 1016 even when the relay 1002 is turned off. The zero-watt module 2000 may apply voltage to the power conversion device 1010, particularly to the MCU 1016 of the power conversion device 1010, in zero-watt mode. The zero-watt module may be designed in a variety of ways.

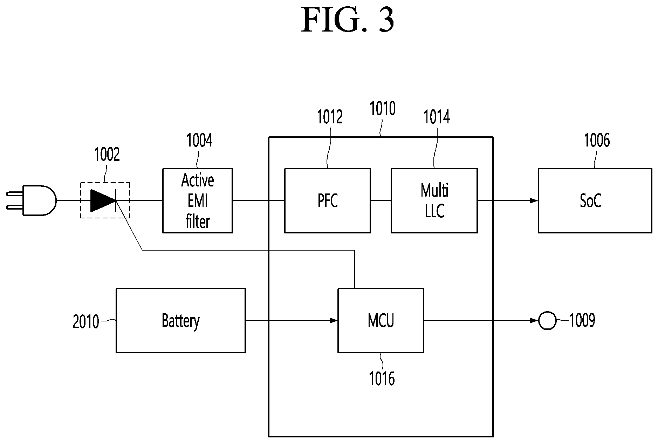

FIG. 3 is a schematic diagram illustrating a power supply circuit for a display device when a zero-watt module is a battery, according to embodiments of the present disclosure.

Referring to FIG. 3, the zero-watt module 2000 may be the battery 2010. The battery 2010 may include a battery management system (BMS).

The battery 2010 may be charged by receiving external power while operating in normal mode, and may apply voltage to the power conversion device 1010, particularly the MCU 1016, in zero-watt mode.

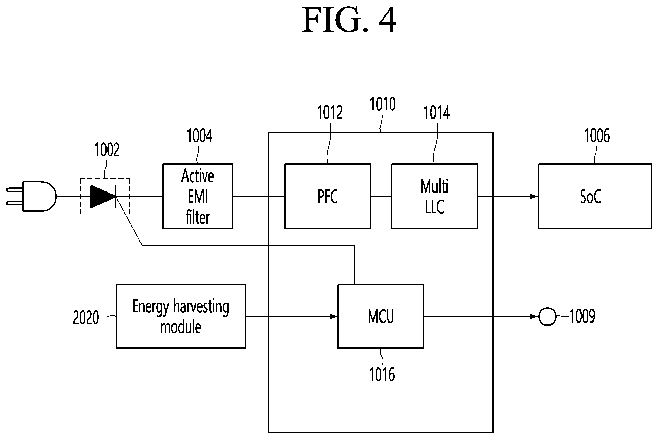

FIG. 4 is a schematic diagram illustrating a power supply circuit for a display device when a zero-watt module is an energy harvesting module, according to an embodiment of the present disclosure.

The energy harvesting module 2020 may apply voltage to the power conversion device 1010, in particular the MCU 1016, in zero-watt mode.

Referring to FIG. 4, the zero-watt module 2000 may be the energy harvesting module 2020. The energy harvesting module 2020 may harvest small amounts of energy from energy sources such as solar power, vibrations, heat, and wind, convert the energy into electrical energy, and store or supply the electrical energy.

The energy harvesting module 2020 may be of various types.

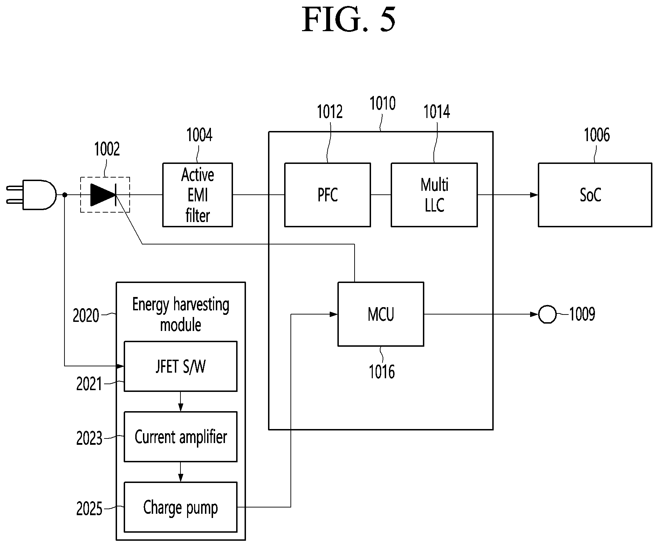

FIG. 5 is a schematic diagram illustrating a first example of the energy harvesting module illustrated in FIG. 4.

Referring to FIG. 5, the energy harvesting module 2020 may include a semiconductor device 2021, a current amplifier 2023, and a charge pump 2025.

The semiconductor device 2021 may conduct using leakage dark current from an external power source. The semiconductor device 2021 may be a JFET switch (JFET SW), but is an example and should not be understood to be limited thereto.

The current amplifier 2023 may amplify the current flowing to the semiconductor device 2021.

The charge pump 2025 may charge a capacitor to generate a reverse voltage or a voltage higher than an input. The charge pump 2025 may generate power by charging and discharging current amplified by the current amplifier 2023, and supply the generated power to the MCU 1016.

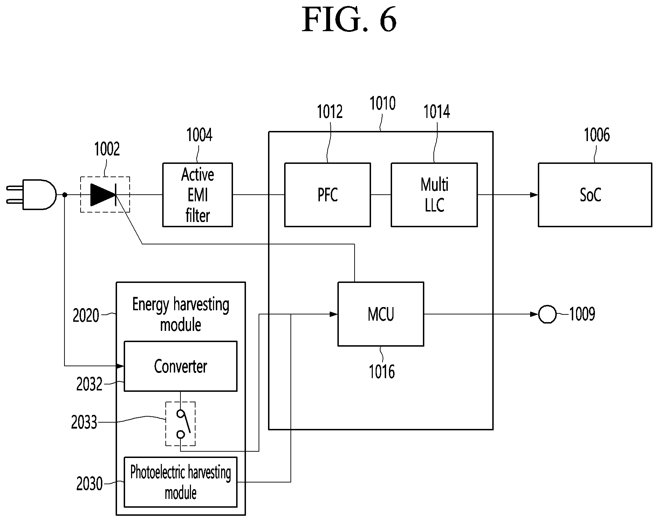

FIG. 6 is a schematic diagram illustrating a second example of the energy harvesting module illustrated in FIG. 4.

Referring to FIG. 6, the energy harvesting module 2020 may include a photoelectric harvesting module 2030, and the photoelectric harvesting module 2030 may convert light to power. The photoelectric harvesting module 2030 may charge light energy and supply the light energy to the MCU 1016.

According to an embodiment, the energy harvesting module 2020 may further include a converter 2032 and a second relay 2033 in addition to the photoelectric harvesting module 2030. Here, the second relay 2033 is merely a designation to distinguish the second relay 2033 from the relay 1002 described above. When the display device includes the second relay 2033, the relay 1002 described above may be the first relay.

The MCU 1016 may perform control such that the second switch 2033 is turned off to allow the converter 2032 not to operate when the photoelectric harvesting module 2030 supplies sufficient voltage to the MCU 1016. Since the second switch 2033 is turned off, consumption of external power may be prevented. The MCU 1016 may perform control such that the second switch 2033 is turned on to allow the converter 2032 to operate when the photoelectric harvesting module 2030 does not supply sufficient voltage to the MCU 1016. In other words, the converter 2032 may receive external power and provide required power to the MCU 1016. Through this, it is possible to minimize the problem of malfunctioning if the photoelectric harvesting module 2030 does not have sufficient energy stored.

Although not shown, according to an embodiment, the zero-watt module 2000 may include the battery 2010 and the energy harvesting module 2020, and one of the battery 2010 and the energy harvesting module 2020 may apply voltage to the power conversion device 1010, particularly the MCU 1016. Which of the battery 2010 and the energy harvesting module 2020 applies voltage to the MCU 1016 may depend on the condition of the display device. According to an embodiment, one of the battery 2010 or the energy harvesting module 2020 may apply voltage to the power conversion device 1010 according to the operating time of the display device in a normal mode. Specifically, the battery 2010 may apply voltage to the power conversion device 1010 if the operating time of the display device in normal mode is greater than a predetermined threshold time, and the energy harvesting module 2020 may apply voltage to the power conversion device 1010 if the operating time of the display device in normal mode is less than the predetermined threshold time. In light of the fact that the battery 2010 is charged while the display device is operating in the normal mode, if the operating time of the display device in the normal mode is short, the power stored in the battery 2010 may be insufficient. In such a situation, the energy harvesting module 2020 is configured to apply voltage to the power conversion device 1010. This allows the battery 2010 and the energy harvesting module 2020 to alternately apply voltage to the power conversion device 1010 in an appropriate manner.

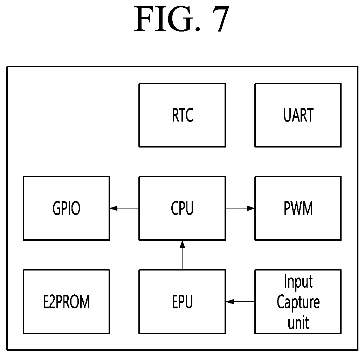

FIG. 7 is a block diagram illustrating a detailed configuration of an MCU provided in a power conversion device for a display device according to an embodiment of the present disclosure.

The MCU may not only serve as the controller of the power conversion device 1010, but also serve as a low power controller in a zero-watt mode.

The MCU may be implemented with a CPU, GPIO, PWM, RTC, UAR, EPU, Input Capture unit, E2ROM, and the like, but is not limited thereto as this is an illustrative example only.

The CPU may intermittently supply voltage to the IR sensor 1019 via PWM in zero-watt mode. The IR sensor 1019 may be turned on intermittently. That is, the IR sensor 1019 may be repeatedly turned on and off. As such, the intermittent supply of voltage to the IR sensor 1019 has the advantage of minimizing current consumption compared to a continuous supply.

The Input Capture unit may receive a power-on signal received by the IR sensor 1019.

The UART may communicate with the SoC 1006. For example, when receiving the power-on signal via the IR sensor 1019, the UART may transmit the power-on signal to the SoC 1006.

The EEPROM may store the operating state (mode) when the display device was last powered off.

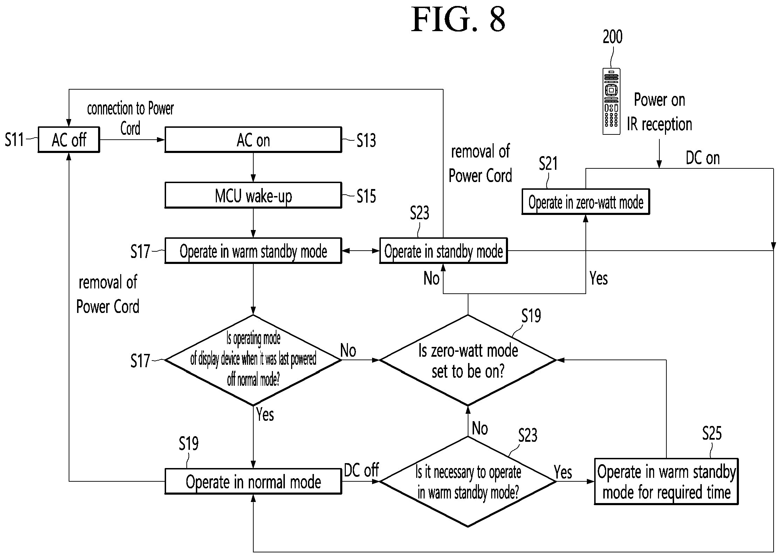

FIG. 8 is a flowchart illustrating a method of operation of a display device supporting a zero-watt mode according to an embodiment of the present disclosure.

The display device may enter AC off state (S11).

The display device may enter AC off state when a power cord is not connected to an external power source.

The display device may enter AC on state when the Power Cord is connected to an external power source (S13).

The display device may switch from the AC off to AC on state when the power cord is connected to the external power source. When the display device enters AC on state, the display device may receive AC voltage via the power cord connected to the external power source.

When the display device enters AC on state, the MCU 1016 may be woken up (S15).

When the display device has switched from the AC off to AC on state, the zero-watt module 2020 may apply voltage to the MCU 1016. Accordingly, the MCU 1016 may be woken up.

If the zero-watt module 2020 is the battery 2010, the battery 2010 may apply voltage, which is charged, to the MCU 1016 to wake up the MCU.

If the zero-watt module 2020 is the energy harvesting module 2020, the energy harvesting module 2020 may apply voltage to the MCU 1016 to wake up the MCU 1016.

If the energy harvesting module 2020 includes the semiconductor device 2021, the current amplifier 2023, and the charge pump 2025, the semiconductor device 2021 may conduct using leakage dark current of AC voltage, the current amplifier 2023 may amplify current flowing through the semiconductor device 2021, and the charge pump 2025 may generate power using a capacitive charge and discharge method to supply power to the MCU 1016.

If the energy harvesting module 2020 includes a photoelectric harvesting module 2030, the photoelectric harvesting module 2030 may supply light energy, which is charged, to the MCU 1016.

The display device may operate in warm standby mode when the MCU 1016 is woken up (S17).

The warm standby mode may be an operating mode that waits for the SoC 1006 to be quickly activated. The display device may first operate in the warm standby mode in anticipation of operating in normal mode immediately. When the display device is in warm standby mode, a lower voltage than in normal mode may be supplied to the SoC 1006. The display device may also operate in warm standby mode when a scheduled recording or the like is set. The display device may operate in warm standby mode or standby mode when the display device is in a standby state in which the display device does not perform any operation, and may operate in warm standby mode when the display device is set to perform a specific operation within a predetermined time, and otherwise operate in standby mode.

While the display device is operating in warm standby mode, the display device may determine whether the operating mode was normal mode when the display device was last powered off (S17).

The display device may store the operating mode when the display device was last powered off. Thus, the display device may obtain information of whether the operating mode was normal mode when the display device was last powered off while operating in warm standby mode.

The display device may operate in normal mode if the operating mode was normal mode when the display device was last powered off (S19).

That is, the display device may operate in the normal mode from the warm standby mode if the operating mode was the normal mode when the display device was last powered off.

If the zero-watt module 2020 is the battery 2010, the battery 2010 may be charged while the display device is operating in normal mode. When the display device is operating in normal mode, the power circuitry may operate to charge the battery 2010.

The display device may be AC off if the power cord is removed from an external power source while the display device is operating in normal mode.

Meanwhile, the display device may obtain information of whether the zero-watt mode is set to on, if the operating mode was not normal mode when the display device was last powered off.

The display device may be set in advance with respect to whether the zero-watt mode is enabled or disabled. The display device may display a separate menu (not shown) for setting whether the zero-wattage mode is enabled or disabled. The display device may receive a user input to set the zero-watt mode to on or off via a menu (not shown). The display device may operate in zero-watt mode under preset conditions when zero-watt mode is set to on. On the other hand, if the zero-watt mode of the display device is set to off, the display device may not operate in zero-watt mode regardless of the preset conditions.

If the zero-watt mode is set to on, the display device may operate in zero-watt mode (S21).

When the display device operates in zero-watt mode, the MCU 1016 may apply voltage to the IR sensor 1009. In particular, the MCU 1016 may intermittently apply voltage to the IR sensor 1009. That is, the MCU 1016 may apply voltage to the IR sensor 1009 at preset intervals.

Accordingly, the IR sensor 1009 may receive a control signal from the remote control device 200 without needing to supply power to the SoC 1006, which is equipped with a main MCU (not shown). Thus, when operating in zero-watt mode, the display device may turn off the relay 1002. Consequently, the power conversion device 1010 does not consume power supplied through the power cord, thereby enabling reduction in power consumption. Only the MCU 1016 of the power conversion device 1010 may operate by receiving power from the zero-watt module 2020.

The IR sensor 1009 may receive, from the remote control device 200, a signal for turning on the power of the display device. When receiving a power-on signal, the MCU 1016 may turn on the relay 1002. When the IR sensor 1009 receives the power-on signal from the remote control device 200, DC (Direct current) on state is entered and the IR sensor 1009 may operate in normal mode (S19).

Meanwhile, in step S19, the display device may operate in standby mode when the zero-watt mode is not set to on (S23).

The standby mode is an idle operating mode that allows the device to detect the reception of commands or inputs. The warm standby mode, which is also an idle operating mode, enables faster activation of the SoC 1006 upon receiving commands or inputs compared to standby mode, and consumes more power. The display device may switch between standby mode and warm standby mode according to the operating state.

If the power cord is removed from the external power source while the display device is being in standby mode, the AC off state may be entered.

In step S19, while operating in normal mode, the display device may receive a power-off command (S19).

When the display device receives the power-off command, DC off state may be entered.

When DC off state is entered according to the power-off command, the display device may determine whether operation in warm standby mode is necessary (S23).

For example, the display device may determine that it is necessary to operate in warm standby mode when activation of the SoC 1006 is already scheduled, such as when a scheduled recording is set, when it is necessary to perform an afterimage compensation operation, or when it is necessary to perform a software update. The display device may be set to perform an afterimage compensation operation or to perform a software update when entering DC off state.

The display device may determine that warm standby operation is not required if there is no scheduled operation.

If operation in warm standby mode is required, the display device may operate in warm standby mode for a required time (S25).

After performing scheduled operation such as reserved recording, afterimage compensation operation, or software update, the display device may determine whether zero-watt mode is set to on (S19).

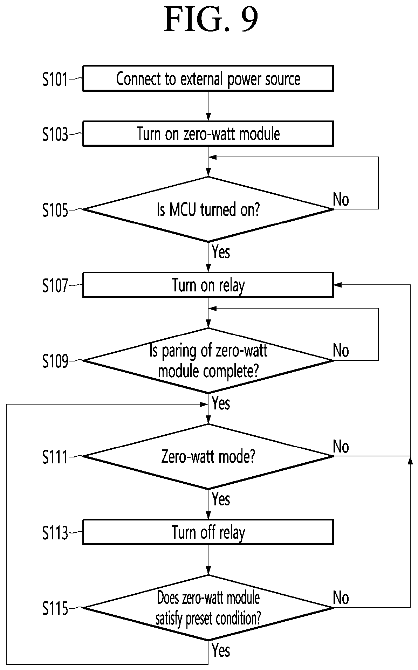

Meanwhile, according to an embodiment of the present disclosure, in the display device, the zero-watt module 2000 may perform a pairing operation during an initial stage. Furthermore, the display device and the paired zero-watt module 2000 may be turned off even in zero-watt mode according to preset conditions. This will be described with reference to FIG. 9.

FIG. 9 is a flowchart illustrating a method of operation of a display device including a zero-watt module, according to an embodiment of the present disclosure.

The display device may be connected to an external power source (S101).

The display device may be connected to the external power source via a power cord.

When the display device is connected to the external power source, the zero-watt module 2000 may be turned on (S103).

When the zero-watt module 2000 is turned on, the zero-watt module 2000 may apply voltage to the MCU 1016.

The display device may determine whether the MCU 1016 is turned on (S105).

If the MCU 1016 is turned on, the display device may turn on the relay 1002 (S107).

With the relay 1002 turned on, the power conversion device 1010 may receive external power. The power conversion device 1010 may operate by receiving the external power.

The display device may obtain information of whether the zero-watt module 2000 has been paired (S109).

The zero-watt module 2000 may perform pairing with the SoC 1006. In particular, the pairing of the zero-watt module 2000 with the SoC 1006 may be performed when the display device first boots up after manufacture.

Once the pairing between the zero-watt module 2000 and the SoC 1006 is complete, the display device may determine whether the display device is operating in zero-watt mode (S111).

When the display device is not operating in zero-watt mode, the display device may maintain the relay 1002 to be on.

When the display device is not operating in zero-watt mode, the display device may control the relay 1002 to be off (S113).

Accordingly, external power consumption of the power conversion device 1010 may be minimized.

The display device may control the relay 1002 to be off, and the MCU 1016 may determine whether the zero-watt module 2000 satisfies a preset condition (S115).

If the zero-watt module 2000 is the battery 2010, the MCU 1016 may determine whether the power charged to the battery 2010 is equal to or greater than a preset threshold power. In other words, the MCU 1016 may determine whether the battery 2010 has sufficient power charged while the display device is operating in zero-watt mode. Accordingly, the MCU 1016 may continue to operate in the zero-watt mode if the power charged in the battery 2010 is equal to or greater than the preset threshold power. The MCU 1016 may control the relay 1002 to be on when the power charged in the battery 2010 is less than the preset threshold power. In other words, even while operating in zero-watt mode, the MCU 1016 may operate in (warm) standby mode or normal mode when the battery 2010 has insufficient power.

If the zero-watt module 2000 is the energy harvesting module 2020, the MCU 1016 may determine whether the output voltage from the energy harvesting module 2020 is equal to or greater than a preset threshold voltage. In other words, the MCU 1016 may determine whether the energy harvesting module 2020 is capable of applying sufficient voltage to the MCU 1016 while operating in zero-watt mode. The MCU 1016 may continue to operate in zero-watt mode if the output voltage from the energy harvesting module 2020 is equal to or greater than the preset threshold voltage. The MCU 1016 may control the relay 1002 to be on when the output voltage from the energy harvesting module 2020 is less than the preset threshold voltage. In other words, even in zero-watt mode, the power conversion device 1010, in particular, the MCU 1016, may receive external voltage if the output voltage from the energy harvesting module 2020 is less than a preset threshold voltage. Even while operating in zero-watt mode, the MCU 1016 may operate in (warm) standby mode or normal mode if the energy harvesting module 2020 is unable to supply sufficient voltage.

According to an embodiment of the present disclosure, the above-described method may be implemented with codes readable by a processor on a medium in which a program is recorded. Examples of the medium readable by the processor include a ROM (Read Only Memory), a Random Access Memory (RAM), a CD-ROM, a magnetic tape, a floppy disk, an optical data storage device, and the like.

The display device as described above is not limited to the configuration and method of the above-described embodiments, but the embodiments may be configured by selectively combining all or part of each embodiment such that various modifications can be made.

## Claims

1. A display device comprising:
a System on Chip (SoC);
a power conversion device configured to supply power to the SoC; and
a zero-watt module configured to apply voltage to the power conversion device in a zero-watt mode.

2. The display device of claim 1, wherein the zero-watt module includes a battery configured to be charged by receiving external power while the display device is operating in a normal mode, and
wherein the battery is configured to apply voltage to the power conversion device in the zero-watt mode.

3. The display device of claim 1, wherein the zero-watt module includes an energy harvesting module, and
wherein the energy harvesting module is configured to apply voltage to the power conversion device in the zero-watt mode.

4. The display device of claim 3, wherein the energy harvesting module includes:
a semiconductor device configured to conduct using leakage dark current from an external power source;
a current amplifier configured to amplify current flowing through the semiconductor device; and
a charge pump configured to generate power by charging and discharging the amplified current.

5. The display device of claim 3, wherein the energy harvesting module includes a photovoltaic harvesting module that converts light into power.

6. The display device of claim 3, wherein, if output voltage of the energy harvesting module is less than a predetermined reference voltage in the zero-watt mode, the power conversion device is configured to receive external voltage.

7. The display device of claim 1, wherein the zero-watt module includes a battery and an energy harvesting module, and
wherein one of the battery or the energy harvesting module is configured to apply voltage to the power conversion device.

8. The display device of claim 7, wherein one of the battery or the energy harvesting module is configured to apply voltage to the power conversion device according to an operating time of the display device in a normal mode.

9. The display device of claim 8, wherein:
the battery is configured to apply voltage to the power conversion device if the operating time of the display device in the normal mode is equal to or greater than a predetermined reference time; and
the power conversion device is configured to apply voltage to the power conversion device if the operating time of the display device in the normal mode is less than the predetermined reference time.

10. The display device of claim 1, wherein the zero-watt module is configured to intermittently apply voltage to an IR sensor in the zero-watt mode.
